# FASCICULE DE BREVET EUROPEEN

(11) **EP 4 303 494 B1**
(45) Date de publication et mention de la délivrance du brevet: **19.02.2025**
(21) Numéro de dépôt: 23181570.5
(22) Date de dépôt: 26.06.2023
(51) Int. Cl.: F24C 15/08, A47J 37/06, F24C 7/06, F24C 7/08

(54) **APPAREIL DE DECONGELATION/RECHAUFFAGE/CUISSON POUR ALIMENT, EN PARTICULIER A BASE DE PATE TELLE QU'UNE PIZZA OU UNE TARTE**
VORRICHTUNG ZUM AUFTAUEN/ERHITZEN/ERHITZEN VON LEBENSMITTELN, INSBESONDERE AUF TEIGBASIS, WIE PIZZA ODER TORTEN
DEFROSTING/HEATING/COOKING APPARATUS FOR FOOD, PARTICULARLY BASED ON DOUGH SUCH AS A PIZZA OR A PIE

(30) Priorité: 08.07.2022 FR 2207048
(43) Date de publication de la demande: 10.01.2024
(73) Titulaire: Roller Grill International, 28800 Bonneval (FR)
(72) Inventeur: AGEORGES, Jean-Pierre, 94100 Saint-Maur-des-Fosses (FR)
(74) Mandataire: Ipside

(56) Documents cités:
- EP-A1- 1 162 408
- EP-A1- 2 361 511
- EP-B1- 2 789 923
- CN-A- 114 115 389
- FR-A1- 2 889 029
- US-A1- 2021 353 097

## Description

### Domaine technique de l'invention

La présente invention concerne un appareil pour décongeler et/ou réchauffer et/ou cuire des aliments, en particulier à base de pâte telle qu'une pizza ou une tarte.

### Technique antérieure

Il existe de nombreuses façon de décongeler, réchauffer ou cuire un aliment et en particulier un produit alimentaire à pâte garnie ou fourrée ou une préparation précuite (par exemple pizza, Flammenkuche, tartes, quiches, paninis, tartines, pâtisseries, biscuits, chaussons, crêpes à base de pâte tel qu'une pizza ou une tarte). Le plus courant est le four comportant une enceinte délimitée par des parois de dessous, de dessus, de fond et latérales et fermée par une porte mobile entre deux positions. Ce type d'enceinte isolée thermiquement renferme par exemple des résistances inférieures, formant un élément sole, et des résistances supérieures, formant un élément voûte.

Une solution de ce type est décrite dans le brevet FR2889029 qui se rapporte à un dispositif de décongélation, réchauffage et cuisson d'une pâte alimentaire, notamment de produits alimentaires surgelés, comportant une enceinte de chauffage pourvue d'au moins une sole chauffante de ladite pâte alimentaire et d'une rampe de tubes émetteurs de rayons chauffants à ondes courtes à forte puissance disposés au-dessus de ladite sole, à faible distance de celle-ci et au-dessus de sa surface, le rayonnement chauffant à ondes courtes étant concentré sur la surface supérieure de la pâte alimentaire par une plaque réfléchissante sus-jacente à ladite rampe de tubes émetteurs et la surface inférieure de la pâte étant chauffée à haute température par contact avec la sole chauffante. Or, il résulte de cette disposition que ce type de four dispositif effectue successivement un ramollissement rapide de la pâte, progressivement dans son épaisseur depuis sa surface supérieure, puis la cuisson de la pâte ramollie par la sole chauffante inférieure et l'ambiance chaude de l'enceinte, et enfin un effet croustillant supérieur de cuisson de la surface supérieure de la pâte en fin de cuisson, ceci sur une durée courte d'environ une à deux minutes. Ce type de four présente certains inconvénients et notamment une déperdition énergétique importante en provenance des tubes émetteurs et de la sole qui doit être chaude en permanence afin de pouvoir répondre immédiatement à une demande de cuisson d'un aliment de façon réaliste et rentable. De plus les parois de ce type de produit atteignent des températures trop importantes car la chaleur, bloquée par la plaque réfléchissante, n'est pas évacuée par le sommet du four.

Le brevet FR3071043 concerne quant à lui un four à pizza électrique destiné à cuire des produits frais ou congelés selon un procédé en deux phases de cuissons successives, à savoir une première phase de mise à température du four par l'intermédiaire d'une sole minérale, qui elle-même est chauffée par les émetteurs placés sous elle pour lui faire atteindre de la température nécessaire pour la cuisson de la pâte, et une seconde de cuisson simultanée de la pâte à pizza par la charge calorique de la sole minérale, les éléments chauffants placés sous elle étant alors éteints tandis que la pâte est cuite par l'énergie thermique emmagasinée dans la sole selon un phénomène d'inertie et par des émetteurs halogènes infrarouges à onde courte disposés au niveau de la voûte du four, de façon à cuire la garniture. Là encore, cette solution n'est pas optimale notamment en termes de rapidité de cuisson et de précision quant au déclenchement et à la température de chauffage des différentes phases (il est difficile de savoir à quel moment la sole minérale est à bonne température pour lancer la seconde phase de cuisson).

Enfin, le brevet FR2955462 décrit un four de décongélation, réchauffage et cuisson d'un produit alimentaire, notamment d'une pâte alimentaire surgelée, comprenant une enceinte de chauffage pourvue d'au moins une sole et d'une rampe de tubes émetteurs de rayons chauffants à ondes courtes à forte puissance disposés au-dessus de ladite sole, à faible distance de celle-ci et au-dessus de sa surface, dans lequel tout ou partie de la surface supérieure desdits tubes émetteurs de rayons chauffants à ondes courtes à forte puissance est recouverte par une couche de céramique. Cette solution permettrait une meilleure réflexion des ondes vers l'élément sole mais présente les mêmes problèmes que cités précédemment concernant le brevet FR2889029, notamment en ce qui concerne la déperdition énergétique vers le haut du four.

Le document EP 1162408 A1 est également pertinent par rapport à l'invention. Il divulgue un four à chauffage électrique statique mettant en oeuvre des batteries de résistances électriques et une dalle réfractaire sur laquelle sont disposés les produits à cuire.

Par ailleurs, tous les systèmes de fours professionnels de cuisson de pizza sont conçus selon un procédé de chauffe simultané des parties basses et hautes. Or, cela présente de nombreux inconvénients car ces fours sont conçus principalement pour cuire des produits partiellement ou totalement surgelés dans des conditions où il importe à la fois d'assurer une cuisson parfaite de la pâte mais également de la garniture, ceci de façon rapide (ces produits étant destinés à la restauration rapide). Or les conditions de la cuisson sont antagonistes en ce qu'il s'agit d'obtenir une cuisson de la pâte qui permette d'obtenir un rendu de cuisson croustillant tout en évacuant le surplus d'hygrométrie contenu dans la garniture en raison de la quantité d'eau présente dans celle-ci.

Il existe ainsi de nombreux fours électriques professionnels de cuisson rapide de pizzas (fraiches ou surgelées) dotés de deux systèmes de chauffage et reposant sur plusieurs technologies. La première technologie est constituée en deux parties :
- Une première partie faite d'une résistance électrique placée au bas de la chambre du four sur laquelle repose une plaque minérale diffusant la chaleur permettant la cuisson de la pâte, la seconde partie étant composée de lampes infrarouges (dites aussi émetteurs de rayons chauffants à ondes courtes) venant cuire la garniture. Ces produits sont toutefois contraints par plusieurs phénomènes : En matière de systèmes de chauffage, les systèmes connus disposent d'un double système de chauffage inférieur et supérieur. Cette caractéristique est rendue nécessaire en ce qu'en matière de cuisson de pizzas ce n'est pas la température du volume du four qui génère la cuisson de la pâte à pizza, mais le contact à la plaque de cuisson (la pizza étant plate et peu épaisse, la cuisson au cœur de la pâte est atteinte rapidement). Le dispositif de chauffage supérieur apporte un complément de chaleur pour à la fois évacuer une hygrométrie trop importante et complémenter la cuisson des ingrédients. Toutefois ce système mixte de chauffage agit simultanément, ce qui engendre plusieurs problèmes connus : tout d'abord la somme des deux sources énergétiques dépensées oblige souvent à quitter le réseau électrique domestique au profit d'un réseau triphasé. Pour les rares appareils se fournissant en réseau électrique domestique, ceux-ci voient leur capacité thermique réduite en raison d'un manque de puissance, selon qu'il s'agisse de cuire une pizza fraiche ou une autre précuite surgelée ou encore une autre crue congelée, ou encore que les ingrédients aient ou non fait l'objet d'une surgélation, les contraintes de cuisson s'exercent différemment en ce qu'il s'agit d'obtenir une cuisson parfaite de l'ensemble (ni trop, ni trop peu, avec la sensation croustillante de la pâte sans que celle-ci soit durcie, et avec un rendu des ingrédients cuits et gratinés qui ne rejettent pas d'eau dans la pâte de façon à la détremper) sans que l'hygrométrie provoquée par la décongélation des aliments ne viennent perturber les caractéristiques organoleptiques attendues (il convient que la pizza réchauffée ou cuite soit égale en saveur à celle d'une pizza fraiche fabriquée immédiatement par un cuisinier). Dans ce domaine le résultat des fours de recuisson à pizza sont assez disparates en ce que soit la cuisson est trop importante, ou encore irrégulière, ou encore convienne à des produits surgelés et non à des produits frais, sans que l'ensemble des résultats ne puisse égaler le rendu d'une pizza fraiche réalisée par l'homme de l'art.
- Une seconde technologie se différencie de la première en ce qu'elle est constituée d'éléments chauffants à quartz tant en haut qu'en bas de la chambre de cuisson.

Enfin toutes les technologies sont dotées d'une sonde qui mesure la température de l'enceinte du four, mais jamais de la plaque de cuisson, de sorte que la température mesurée n'est pas celle qui intervient dans la cuisson de la pâte à pizza. Cela provoque des désagréments importants ne pouvant être totalement maitrisés.

Il ressort de ce qui précède que ces solutions ne sont pas optimisées en termes d'homogénéité et de rapidité de cuisson et/ou ne peuvent pas fonctionner sur un réseau domestique monophasé de type 16 ampères, sauf à dépasser le seuil de puissance autorisé par élément de chauffage.

Ainsi, la puissance des différents éléments de chauffage n'est pas adaptée à certains aliments ou est difficilement réglable, ce qui provoque un chauffage trop important, pas assez important ou manquant d'uniformité.

### Présentation de l'invention

La présente invention vise à remédier à ces inconvénients avec une approche totalement novatrice.

A cet effet, selon un premier aspect, la présente invention se rapporte à un appareil de décongélation/réchauffage/cuisson pour aliment, en particulier à base de pâte telle qu'une pizza ou une tarte, comprenant :
- un châssis externe comportant une paroi arrière, une paroi supérieure, une paroi inférieure, deux parois latérales,
- une enceinte délimitée par une paroi de fond, une paroi de dessus, une paroi inférieure, deux parois latérales et une porte avant mobile entre au moins une première position ouverte dans laquelle il est possible de remplir l'enceinte à l'aide d'un aliment à décongeler/réchauffer/cuire, ou de retirer l'aliment de l'enceinte une fois ce dernier décongelé/réchauffé/cuit, et une deuxième position fermée dans laquelle l'aliment est décongelé/réchauffé/cuit,
- au moins une source inférieure de chaleur, appelée élément sole, alimentée en courant monophasé,
- au moins une source supérieure de chaleur, appelée élément voûte, alimenté en courant monophasé,
caractérisé en ce que l'élément sole comporte :
- au moins deux paires de résistances électriques parallèles s'étendant entre deux parois se faisant face de l'enceinte, réparties en une paire centrale et une paire périphérique, et
- un moyen pour piloter chaque paire de résistances électriques de manière sélective et indépendante les unes des autres..

Cette solution permet de mieux adapter la puissance requise pour décongeler, chauffer et surtout cuire un aliment frais ou surgelé de type pâtes garnies ou fourrées ou de préparations précuites (par exemple pizza, flammenkuche, tartes, quiches, paninis, tartines, pâtisseries, biscuits, chaussons, crêpes) à la bonne température et pendant une durée optimisée, sans nécessiter de mettre en route la totalité des moyens de chauffage en présence, et en restant sous une valeur seuil de consommation électrique nécessitant une liaison électrique de type triphasé.

Cette optimisation de l'utilisation des moyens de chauffage permet de réduire les temps de cuisson/décongélation des aliments, le tout dans un appareil compact, simple d'utilisation, ne nécessitant pas de compétences particulières (par ex. uniquement une consigne de cuisson : temps + température).

Enfin, la solution de la présente invention permet un meilleur maintient en température et une constance de la température, une répétabilité des cycles de cuisson, un meilleur confort d'utilisation, une maintenance optimisée et un coût réduit.

Avantageusement, l'élément sole comporte une troisième paire médiane de résistances électriques, chaque résistance de cette paire médiane étant intercalée entre une résistance centrale et une résistance périphérique des deux autres paires.

Cette solution permet de moduler de manière encore plus précise le chauffage de l'élément sole.

De préférence, les résistances médianes et/ou centrales sont actionnables à puissance réduite, par exemple à mi-puissance, en particulier en même temps que la mise en route de la totalité de l'élément voûte.

Cette solution permet une consommation réduite de la puissance requise tout en fournissant une quantité de chaleur suffisante et homogène.

Selon un mode de réalisation préférée de la présente invention, les résistances électriques de l'élément sole sont surmontées d'une plaque plane en chamotte réfractaire formant un support pour aliment et diffusant la chaleur accumulée, ladite plaque étant pourvue, au niveau d'une paroi de dessous, d'une sonde de température disposés sensiblement en son centre.

Cette solution permet d'optimiser la diffusion et le contrôle de la chaleur fournie à l'aliment par l'élément sole.

Selon une caractéristique complémentaire, la plaque réfractaire de support repose directement sur les résistances électriques de l'élément sole et est disposée dans le prolongement d'une paroi vitrée interne de la porte mobile, dans la première position ouverte de cette dernière.

Cette solution permet de positionner l'aliment très facilement sur la plaque réfractaire et de le retirer de cette dernière sans risque de brûlures pour l'utilisateur. La plaque réfractaire est également plus facile à retirer de l'enceinte pour son nettoyage.

De préférence, l'élément voute comporte plusieurs tube en verre d'émission de rayonnement infrarouge.

Selon un aspect complémentaire, les émetteurs tubulaires de rayonnement infrarouge sont tous portés par un tiroir amovible commun coulissant dans des glissières ménagées dans les parois latérales de l'enceinte, ledit tiroir étant maintenu en position par des ergots mécaniques et des ressorts de compression prenant appui sur la paroi de dessus de l'enceinte.

Cette solution permet une installation et une maintenance améliorée de l'élément voûte par un montage/démontage ne nécessitant par exemple aucun outillage ni visserie.

Selon un aspect particulièrement intéressant de la présente invention, les émetteurs tubulaires présentent une partie supérieur en verre dépolie.

Cette solution permet de mieux répartir la chaleur diffusée par l'élément voûte et notamment d'éviter les pertes de rayonnement vers la paroi de dessus de l'enceinte, c'est-à-dire à l'opposé de l'aliment.

Selon une caractéristique avantageuse de la présente invention, l'appareil comporte au moins une chicane ménagée entre les parois latérales respectivement de l'enceinte interne et du châssis externe et des évents latéraux de manière à former un chemin de circulation d'une lame d'air chaud issu de l'intérieur de l'enceinte pour la diriger vers l'extérieur de l'appareil.

Cette solution permet d'optimiser la circulation d'air et de garantir une meilleur sécurité d'utilisation de l'appareil.

La présente invention se rapporte également à un procédé de décongélation/réchauffage/cuisson pour aliment, en particulier à base de pâte telle qu'une pizza ou une tarte, à l'aide d'un appareil tel que décrit précédemment, consistant à piloter chaque paire de résistances électriques de manière sélective et indépendante les unes des autres.

Avantageusement, l'appareil comportant une troisième paire médiane de résistances électriques, chaque résistance de cette paire médiane étant intercalée entre une résistance centrale et une résistance périphérique des deux autres paires, une des trois paires de résistances électriques de la source inférieure de chaleur est activée à mi-puissance en même temps que la source supérieure de chaleur.

De manière préférée, la paire médiane de résistances électriques est activée à mi-puissance en même temps que la source supérieure de chaleur.

### Brève description des figures

D'autres avantages, buts et caractéristiques de la présente invention ressortent de la description qui suit faite, dans un but explicatif et nullement limitatif, en regard des dessins annexés, dans lesquels :
[Fig. 1] la figure 1 est une vue en perspective éclatée d'un appareil de décongélation/chauffage/cuisson conforme à la présente invention,
[Fig. 2] la figure 2 est une vue en perspective de l'appareil de cuisson de la figure 1 dans un état assemblé et avec une porte en façade en position fermée,
[Fig. 3] la figure 3 est une vue de face de la figure 2,
[Fig. 4] la figure 4 est une vue de dessus de la figure 3,
[Fig. 5] la figure 5 est une vue de de dessous de la figure 3,
[Fig. 6] la figure 6 est une vue de côté de la figure 3,
[Fig. 7] la figure 7 est une vue en coupe selon la flèche AA' de la figure 3,
[Fig. 8] la figure 8 est une vue similaire à la figure 7 mais dans laquelle la porte est ouverte,
[Fig. 9] la figure 9 est une vue en coupe selon la flèche BB' des figures 4 et 5, et
[Fig. 10] la figure 10 est une vue en coupe selon la flèche CC' des figures 4 et 5.

### Description des modes de réalisation

On note, dès à présent, que les figures ne sont pas nécessairement à l'échelle, sans que cela nuise à leur compréhension.

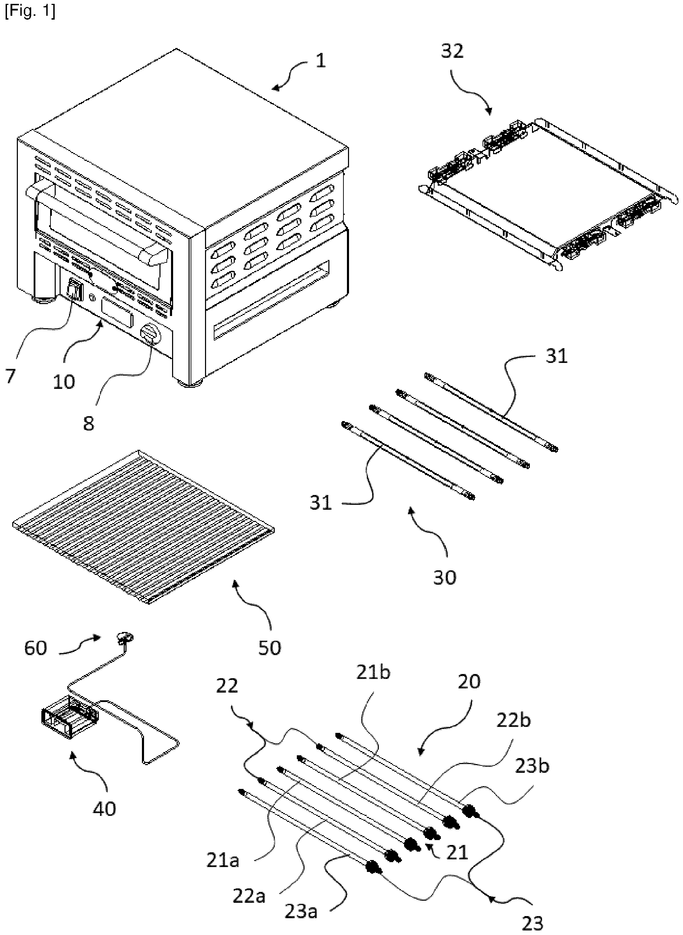

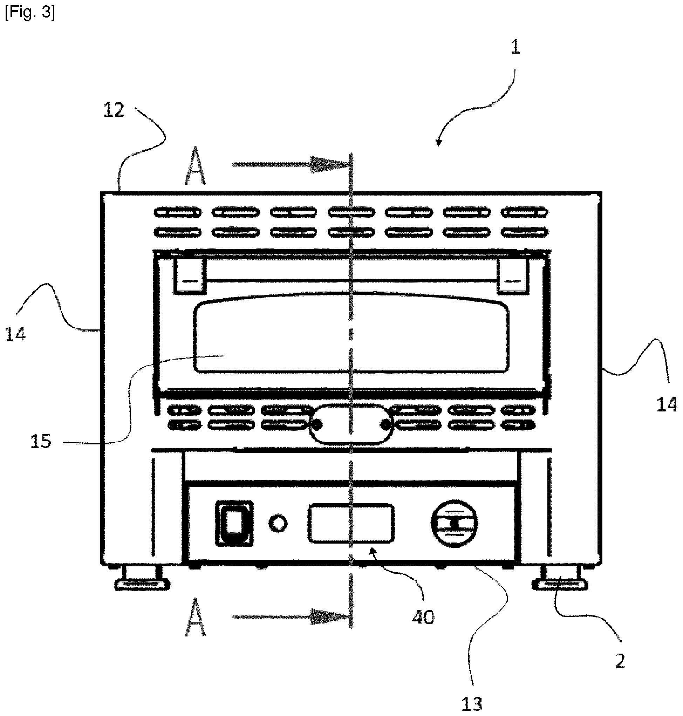

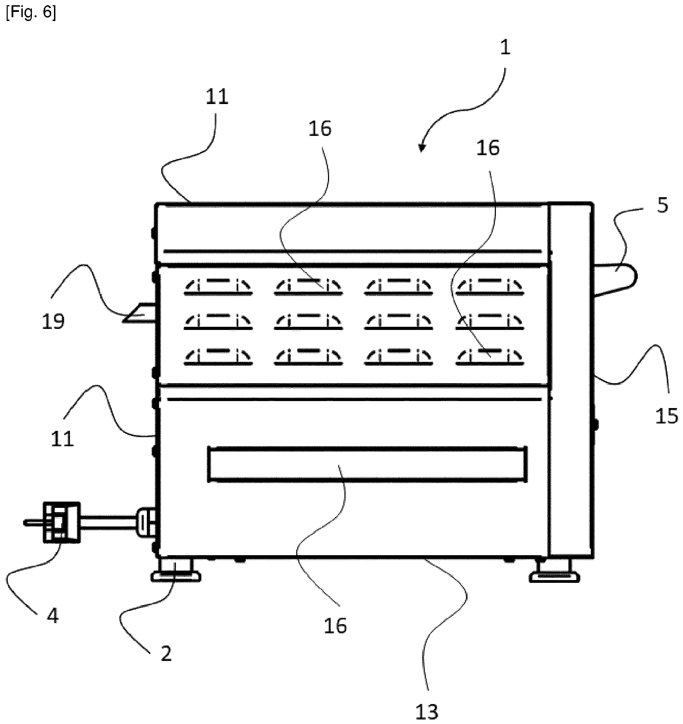

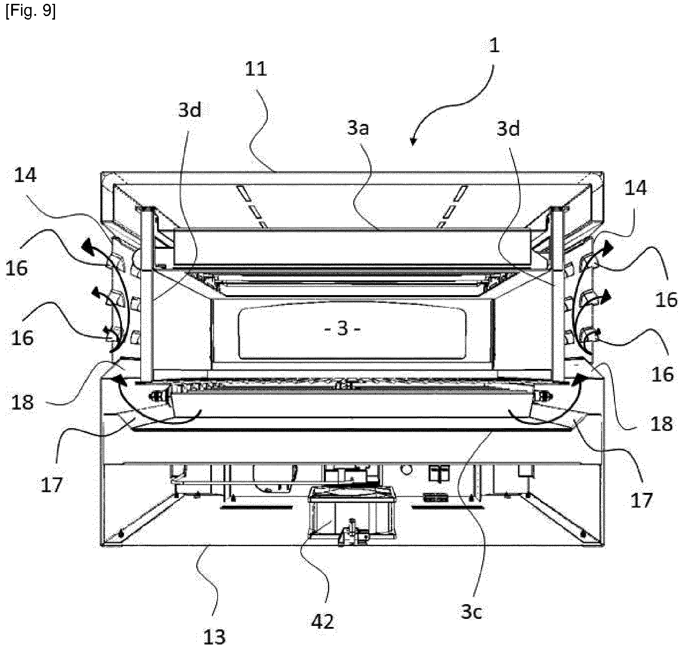

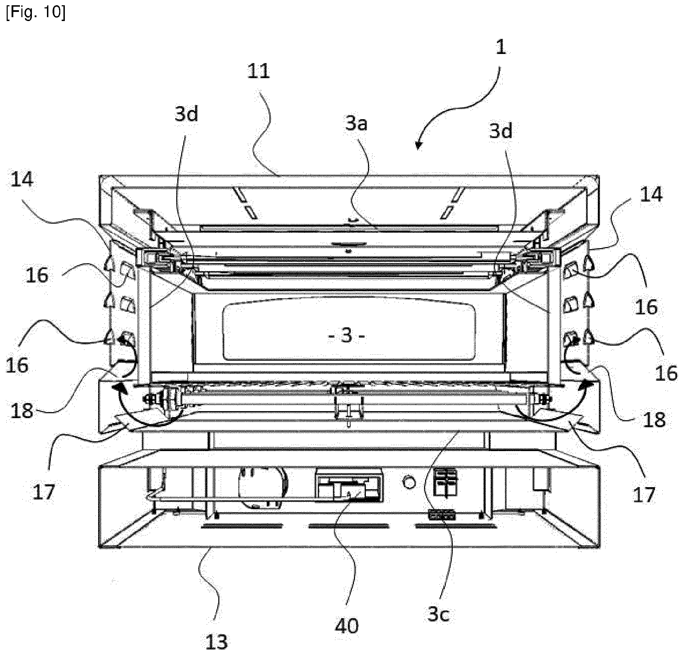

Les figures 1 à 10 représentent un appareil 1 de décongélation/réchauffage/cuisson conforme à la présente invention et destiné à décongeler, chauffer ou cuire un aliment frais ou surgelé, et en particulier un produit alimentaire à pâte garnie ou fourrée, ou bien une préparation précuite. On peut par exemple citer parmi ces aliments une pizza, une flammenkuche, des tartes, des quiches, des paninis, des tartines de pain garnies, des pâtisseries, des biscuits, des chaussons, ou encore des crêpes.

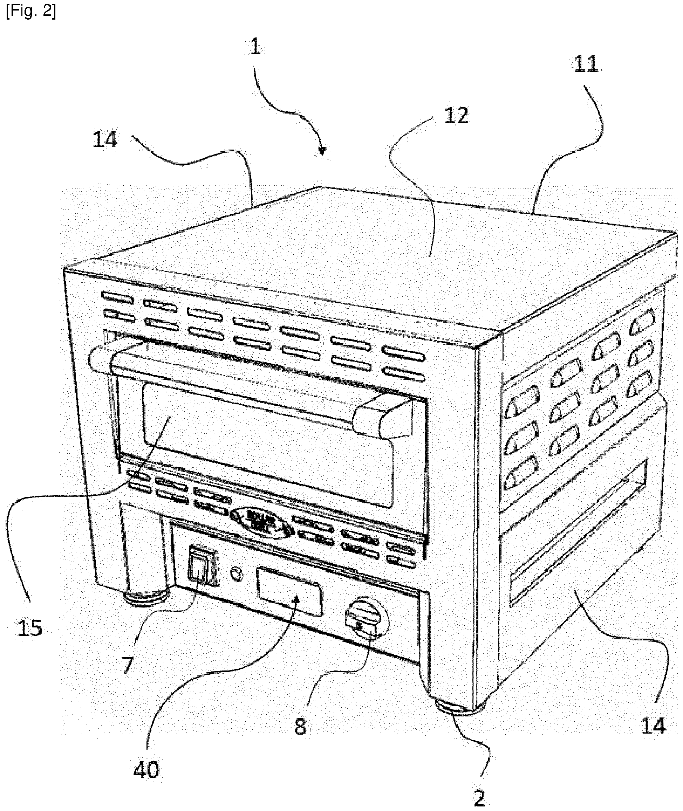

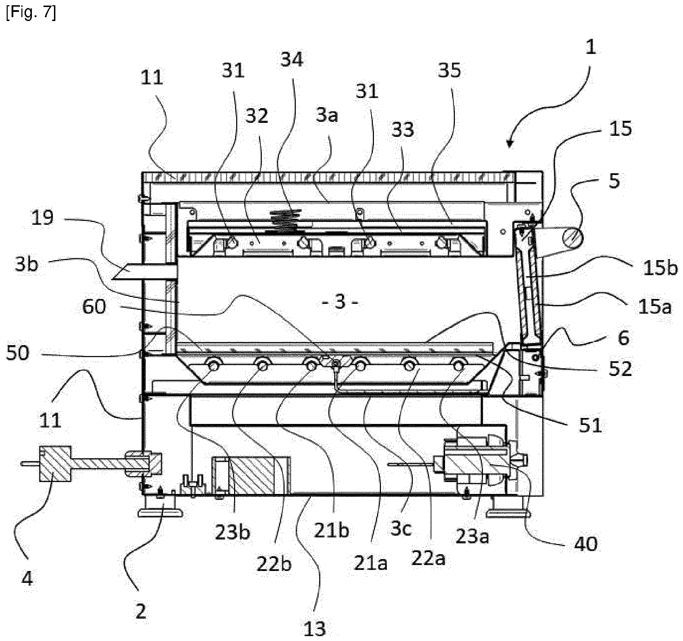

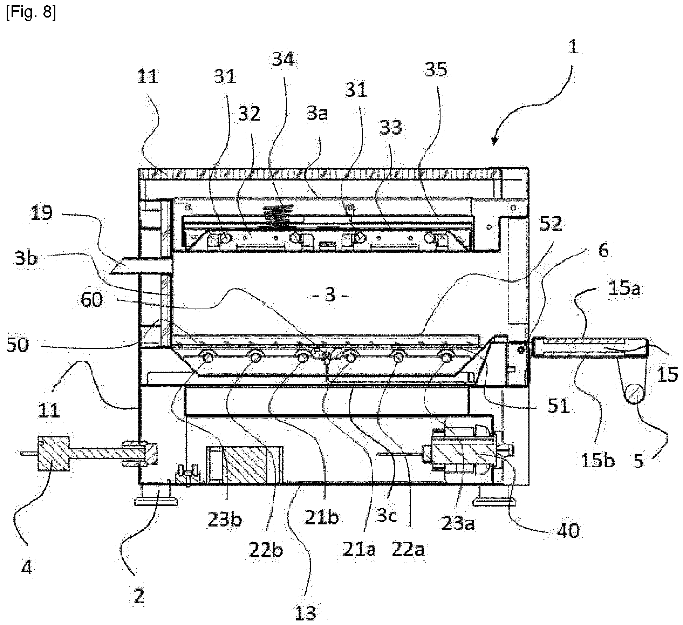

Cet appareil 1 comprend globalement un châssis extérieur 10 reposant sur des pieds 2 et comportant une paroi arrière 11, une paroi supérieure 12, une paroi inférieure 13, deux parois latérales 14 et une porte avant 15, formant la dernière paroi du châssis 10, articulée à l'aide d'une poignée 5 autour d'une charnière 6 entre au moins une première position ouverte (figure 8) dans laquelle il est possible de remplir l'enceinte 3 à l'aide d'un aliment à décongeler/réchauffer/cuire, ou de retirer l'aliment de l'enceinte 3 une fois ce dernier décongelé/réchauffé/cuit, et une deuxième position fermée (figures 2 et 7 notamment) dans laquelle l'aliment est décongelé/réchauffé/cuit à l'intérieur de l'enceinte 3 de l'appareil 1.

Le châssis externe 10 entoure une enceinte interne 3 délimitée principalement par des parois internes de dessus 3a, de fond 3b, de dessous 3c, et latérales 3d, complétées par la porte articulée 15 et plus précisément par une vitre interne 15b faisant office de paroi avant lorsque ladite porte est dans sa position fermée.

Les parois du châssis externe 10 et de l'enceinte interne 3 sont globalement parallèles entre elles et espacées de plusieurs millimètres à plusieurs centimètres, notamment pour former une isolation thermique par circulation d'air. Des matériaux isolants thermiques de type connu peuvent également être incorporés dans certains des parois citées précédemment, par exemple entre la paroi supérieure 12 du châssis externe 10 et la paroi de dessus 3a de l'enceinte interne 3, afin d'améliorer cette isolation thermique.

Les différentes parois extérieures et intérieures de l'appareil (châssis 10 et enceinte interne 3) sont typiquement en tôles d'acier inoxydable alimentaire pliées, soudées, vissées ou rivetées, pour une conception simple, légère et robuste, une bonne résistance mécanique, une bonne tenue à la température et une facilité de nettoyage (hygiène).

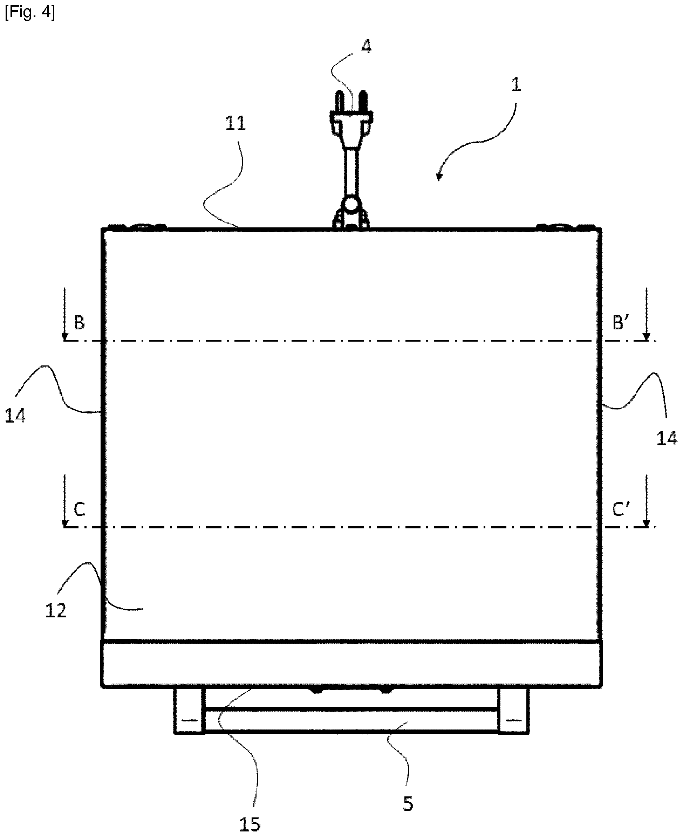

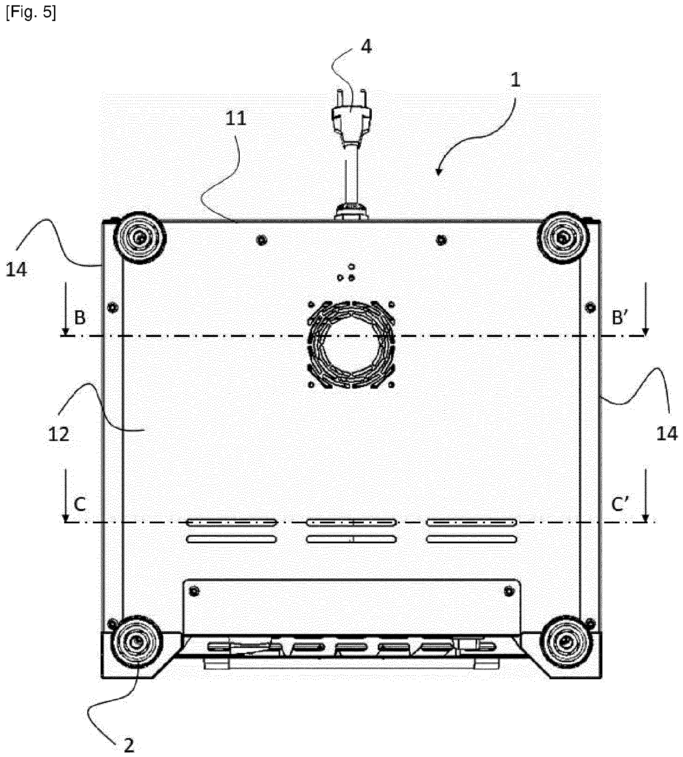

L'appareil 1 est de type compact et transportable pour une utilisation en restauration collective, dans une cuisine de restaurant, dans un food-truck, en camping ou encore en mode totalement nomade, par exemple en milieu associatif, sportif, ou culturel tel que sur des sites de divertissement (concert, festival) pour une alimentation ponctuelle ou en complément d'activité. L'appareil 1 est alimenté à une source de courant monophasé 16 A à l'aide d'une prise électrique 4 (voir figures 4 et 5) sortant de la paroi arrière 11.

L'enceinte interne 3 renferme au moins une source inférieure de chaleur 20, appelée élément sole, et au moins une source supérieure de chaleur 30, appelée élément voûte, des boutons de commande (principalement pour allumer/éteindre l'appareil et pour régler la température et les modes de fonctionnement).

La source supérieur de chaleur 30 comporte une série de quatre tubes 31 en verre formant chacun un émetteur de rayonnement infrarouge relié à un module 40 de commande et de régulation thermique disposé en façade (sous la porte articulée 15) et destiné à piloter leur mise en service et leur extinction. Ce module électronique 40 est relié à un interrupteur de mise en route 7 et un thermostat rotatif manuel 8.

Ces émetteurs tubulaires 31, de préférence identiques, sont disposés parallèlement les uns aux autres de manière espacée et sont portés par un tiroir amovible commun 32 monté coulissant dans des glissières 33 ménagées dans les parois latérales 3d de l'enceinte interne 3. Le tiroir coulissant 32 est maintenu en position à l'intérieur de l'enceinte interne 3 par des ergots mécaniques et un ou plusieurs ressorts de compression 34 prenant appui contre la paroi de dessus 3a de l'enceinte interne 3. Cette solution ne fait appel à aucun outillage ni visserie et est de ce fait particulièrement pratique car elle permet un montage et un démontage extrêmement simple du tiroir 32 pour le nettoyer ou changer si besoin les émetteurs tubulaires 31 qu'il supporte.

Les émetteurs tubulaires 31 sont positionnées dans l'enceinte interne 3 pour permettre une émission de rayonnement infrarouge en direction de l'élément sole 20. A cet effet, les émetteurs tubulaires 31 présentent de préférence une partie supérieure en verre dépolie couvrant par exemple la moitié de leur circonférence. Dans le cas présent, la puissance maximum de l'élément voûte 30 est de 2400W, chaque résistance tubulaire 31 produisant 600W.

La source inférieure de chaleur 20 comporte quant à elle au moins deux, et de préférence trois, paires 21, 22 et 23 de résistances électriques disposées à proximité de la paroi inférieure 3b et destinées à réchauffer un aliment placé dans l'enceinte interne 3.

Plus précisément, l'élément sole 20 comporte une paire centrale 21 de résistances 21a et 21b, une paire périphérique 23 de résistances 23a et 23b, et une paire médiane 22 de résistances 22a et 22b, la résistance 22a étant placée entre la résistance 21a et la résistance 23a tandis que la résistance 22b est placé entre la résistance 21b et la résistance 23b. Les six résistances sont, dans le cas présent, disposées transversalement entre les parois 2d de l'enceinte 3, parallèlement les unes aux autres et réparties à égale distance pour une répartition homogène de la chauffe et un meilleur rapport performance/coût des éléments. Dans le cas présent, la puissance maximum de l'élément sole 20 est de 3600W, chaque résistance produisant 600W.

Conformément à la présente invention, chaque paire 21, 22 et 23 de résistances est alimentée en courant monophasé 220V et est reliée au module de commande 40 pour pouvoir être mise en route de manière sélective et indépendamment des autres paires. En particulier, la paire 22 de résistances médianes 22a et 22b et/ou la paire 21 de résistances centrales 21a et 21b peu(ven)t être mise(s) en route à mi puissance, en particulier lorsque l'élément voûte 30 est également activé à pleine puissance. Le même raisonnement peut se tenir concernant les paires 21 et 23 ou 22 et 23. Cela permet de maintenir une température très homogène et suffisamment élevée dans l'enceinte 3, tout en ne dépassant pas un seul de puissance maximum autorisé de 3600 Watts au niveau de l'ensemble des éléments chauffants activés simultanément.

L'enceinte interne 3 renferme également une plaque de cuisson 50 amovible de type chamotte réfractaire en matériau minéral à fort inertie thermique comportant une face inférieure 51 posée sur les résistances de l'élément sole 20 et une surface supérieure plane 52 faisant office de support pour l'aliment à décongeler/réchauffer/cuire. L'utilisation d'un élément réfractaire en matière minérale pour former la plaque de support 50 permet une restitution optimisée de la chaleur et une grande constance de la température grâce à la forte capacité de restituer la chaleur emmagasinée pendant une longue période.

Conformément aux figures 7 et 8, la plaque réfractaire 50 est pourvue d'une sonde de température 60 de type thermocouple reliée au module de commande électronique 40 et disposée sensiblement en son centre, au niveau de la face inférieure 51. Ce positionnement particulier de la sonde de température permet d'améliorer la réactivité du thermostat 8 par anticipation de la restitution de chaleur accumulée dans le matériau constituant la plaque de support réfractaire 50 et une meilleure constance de la température.

La plaque de support réfractaire 50 est disposée dans le prolongement d'une paroi vitrée interne 15b de la porte articulée 15, dans la première position ouverte de cette dernière (figure 7). Ceci permet une meilleure accessibilité à l'intérieur de l'enceinte 3 et favorise le positionnement des aliments sur la plaque réfractaire 50 une fois la porte articulée 15 ouverte. Cela permet également de retirer facilement la plaque réfractaire 50 pour son nettoyage. La porte articulée 15 comporte également une paroi externe 15a espacée de la paroi interne 15b par un espace rempli d'air, à la manière d'un double vitrage, afin d'améliorer l'isolation thermique et la chaleur régnant dans de l'enceinte interne 3.

D'un point de vue structurel, les parois latérales de l'enceinte interne 3 et du châssis externe 10 forment une double paroi comportant au moins une chicane basse 17 et une chicane haute 18 permettant de former un chemin de circulation (flèches d'illustration) d'une lame d'air chaud issu de l'intérieur/sous l'enceinte 3 pour la diriger vers l'extérieur de l'appareil 1. La présence de multiples évents 16 dans les paroi latérales 14 permettant le passage de lames d'air (aération invisible) autour de l'enceinte interne 3 en direction de l'extérieur du châssis 10 améliore la sécurité d'utilisation et protège l'appareil 1 d'une éventuelle surchauffe.

Un tube 19 est également prévu en haut de la paroi de fond 11 et fait communiquer l'intérieur de l'enceinte 3 avec l'extérieur de l'appareil 1 pour extraire la vapeur produite lors de la cuisson. Ce tube 19 d'évacuation de la vapeur permet d'éliminer la condensation de l'enceinte 3 et favorise une atmosphère sèche afin d'obtenir des aliments croustillants.

Le fonctionnement de l'appareil 1 est le suivant :
La porte articulée 15 est ouverte à l'aide de la poignée 5 et l'aliment congelé ou à cuire est posé sur la surface plane supérieure 52 plaque de support réfractaire 50. L'appareil 1 est mis en route à l'aide du bouton 7 et le thermostat 8 est réglé sur la puissance choisie (exprimée par exemple avec un nombre équivalent à une certaine puissance de chauffage, la puissance maximum autorisée étant de 3600 W en 220V / 16A.

Le moyen de pilotage électronique 40 gère alors automatiquement la puissance des éléments sole 20 et voûte 30 pour alimenter les résistances en fonction de la température choisie.

Le chauffage est réalisé en deux phases successives, nécessitant toujours une puissance cumulée inférieure à 3600W en 16 Ampères afin de permettre l'utilisation d'un réseau électrique classique monophasé.
1 : préchauffage de la sole 20 par les 3 paires de résistances, en pouvant per exemple monter à pleine puissance (6 fois 600 Watt),
2 : régulation de la sole 20 à la température de consigne via les résistances entre une puissance minimum et la puissance maximum,
3 : coupure des résistances de la sole et restitution de l'énergie accumulée par la pierre, activation des résistances tubulaires de l'élément voûte 30 pour une durée programmée selon l'aliment à cuire.

En ce qui concerne le maintien en température, l'utilisateur a la possibilité d'activer des zones spécifiques.

Ainsi, il est possible de ne faire fonctionner que les résistances des paires médiane 22b et 23b à une puissance réduite, par exemple à mi puissance, tout en faisant fonctionner l'ensemble des résistances tubulaires à infrarouge 31 de l'élément voûte 30 à pleine puissance. Dans ce cas particulier, le total des puissances atteint ainsi 3600W. Le même raisonnement peut être tenu avec les résistances 21a et 21b ou 23a et 23b dont la puissance des paires correspondantes de résistances (centrales ou périphériques) serait alors réduite de moitié lorsqu'elles fonctionnent en même temps que toutes les résistances de l'élément voute 3.0.

L'appareil 1 conforme à la présente invention permet ainsi de réduire notablement les temps de cuisson/décongélation des aliments, dans un volume compact, un poids réduit, en se branchant sur une simple source de courant domestique monophasé.

L'appareil est extrêmement simple d'utilisation et intuitif et ne nécessite pas de compétences particulières (par exemple uniquement une consigne de cuisson : durée de cuisson + température) de sorte qu'il est adaptée à de nombreux usages.

L'utilisation des résistances de l'élément sole 20 en combinaison, dans certains situation, avec l'élément voûte 30, permet un meilleur maintient en température et une constance de la température, une bonne répétabilité des cycles de cuisson, un meilleur confort d'utilisation, et une réduction des coûts de maintenance.

Le bandeau du module de commande 40 est décalé vers l'arrière de l'appareil (commande « encastrés ») ce qui permet d'éviter la manipulation accidentelle des commandes et les salissures en cas de coulures ou de projections.

Il est possible de ne prévoir que deux paires (centrale et médiane ou médiane et périphérique) de résistances pour constituer l'élément sole 20.

Les résistances de l'élément sole peuvent s'étendre non pas en travers de l'enceinte 3, c'est-à-dire entre les parois latérales 2d, mais entre la paroi de fond 2b et la paroi interne 15b de porte articulée 15.

Les résistances ne sont pas forcément identiques (certaines peuvent avoir une puissance un peu plus importantes que d'autres) et leur espacement n'est pas forcément homogène (elles peuvent être plus ou moins espacées/resserrées pour créer des zones plus ou moins chaudes) dès lors que la puissance maximum autorisée des différentes résistances activées simultanément ne dépasse jamais pas 3600W.

Plusieurs sondes 60 de température supplémentaires peuvent être prévues sous la plaque de support 50 en chamotte réfractaire de manière à optimiser la mesure de la température régnant au niveau de la face inférieure 51 et d'adapter en conséquence la mise en route des résistances de l'élément sole 20.

## Revendications

1. Appareil (1) de décongélation/réchauffage/cuisson pour
aliment, en particulier à base de pâte telle qu'une pizza ou une tarte, comprenant :
- un châssis externe (10) comportant une paroi arrière (11), une paroi supérieure (12), une paroi inférieure (13), deux parois latérales (14),
- une enceinte (3) définie par une paroi de fond (3b), une paroi de dessus (3a), une paroi inférieure (3c), deux parois latérales (3d) et une porte avant (15) mobile entre au moins une première position ouverte dans laquelle il est possible de remplir l'enceinte (3) à l'aide d'un aliment à décongeler/réchauffer/cuire, ou de retirer l'aliment de l'enceinte (3) une fois ce dernier décongelé/réchauffé/cuit, et une deuxième position fermée dans laquelle l'aliment est décongelé/réchauffé/cuit,
- au moins une source inférieure de chaleur (20), appelée élément sole, alimentée en courant monophasé,
- au moins une source supérieure de chaleur (30), appelée élément voûte, alimenté en courant monophasé,
**caractérisé en ce que** l'élément sole (20) comporte :
- au moins deux paires (21, 23) de résistances électriques parallèles (21a, 21b ; 23a, 23b) s'étendant entre deux parois (3d ; 3b, 15b) se faisant face de l'enceinte (3), réparties en une paire centrale (21), et une paire périphérique (23), et
- un moyen (40) configuré
pour piloter chaque paire (21, 23) de résistances électriques de manière sélective et indépendante les unes des autres.

2. Appareil (1) de décongélation/réchauffage/cuisson selon la revendication 1, caractérisé en que l'élément sole (20) comporte une troisième paire médiane (22) de résistances électriques (22a, 22b), chaque résistance (22a, 22b) de cette paire médiane (22) étant intercalée entre une résistance centrale (21a, 23a) et une résistance périphérique (21b, 23b) des deux autres paires (21, 23).

3. Appareil (1) de décongélation/réchauffage/cuisson selon l'une quelconque des revendications précédentes, **caractérisé en ce que** les résistances médianes (22a, 22b) et/ou centrales (21a, 21b) sont actionnables à puissance réduite, par exemple à mi-puissance, en particulier en même temps que la mise en route de la totalité l'élément voûte (30).

4. Appareil (1) de décongélation/réchauffage/cuisson selon l'une quelconque des revendications précédentes, **caractérisé en ce que** les résistances électriques de l'élément sole (20) sont surmontées d'une plaque plane (50) en chamotte réfractaire formant un support pour aliment et diffusant la chaleur accumulée, ladite plaque (50) étant pourvue, au niveau d'une surface inférieure (51), d'une sonde de température (60) disposés sensiblement en son centre.

5. Appareil (1) de décongélation/réchauffage/cuisson selon la revendication 4, **caractérisé en ce que** la plaque réfractaire de support (50) repose directement sur les résistances électriques de l'élément sole (20) et est disposée dans le prolongement d'une paroi vitrée interne (15b) de la porte mobile (15), dans la première position ouverte de cette dernière.

6. Appareil (1) de décongélation/réchauffage/cuisson selon l'une quelconque des revendications précédentes, **caractérisé en ce que** l'élément voute (30) comporte plusieurs tube en verre (31) d'émission de rayonnement infrarouge.

7. Appareil (1) de décongélation/réchauffage/cuisson selon la revendication 6, **caractérisé en ce que** les émetteurs tubulaires (31) de rayonnement infrarouge sont tous portés par un tiroir amovible commun (32) coulissant dans des glissières (33) ménagées dans les parois latérales (3d) de l'enceinte (3), ledit tiroir (32) étant maintenu en position par des ergots mécaniques et des ressorts de compression (34) prenant appui contre la paroi de dessus (3a) de l'enceinte (3).

8. Appareil (1) de décongélation/réchauffage/cuisson selon la revendication 6 ou 7, **caractérisé en ce que** les émetteurs tubulaires (31) présentent une partie supérieure en verre dépolie.

9. Appareil (1) de décongélation/réchauffage/cuisson selon l'une quelconque des revendications précédentes, **caractérisé en ce qu'**il comporte au moins une chicane (17 ; 18) ménagée entre les parois latérales (3d, 14) respectivement de l'enceinte interne (3) et du châssis externe (10) et des évents latéraux (16) de manière à former un chemin de circulation d'une lame d'air chaud issu de l'intérieur de l'enceinte (3) pour la diriger vers l'extérieur de l'appareil (1).

10. Procédé de décongélation/réchauffage/cuisson pour aliment, en particulier à base de pâte telle qu'une pizza ou une tarte à l'aide d'un (1) appareil selon l'une quelconque des revendications, **caractérisé en ce qu'**il consiste à piloter chaque paire (21, 23) de résistances électriques de manière sélective et indépendante les unes des autres.

11. Procédé selon la revendication 10, **caractérisé en ce que**, l'appareil comportant une troisième paire médiane (22) de résistances électriques (22a, 22b), chaque résistance (22a, 22b) de cette paire médiane (22) étant intercalée entre une résistance centrale (21a, 23a) et une résistance périphérique (21b, 23b) des deux autres paires (21, 23), une des trois paires (21 ; 22 ; 23) de résistances électriques de la source inférieure de chaleur (20) est activée à mi-puissance en même temps que la source supérieure de chaleur (30).

12. Procédé selon la revendication 11, **caractérisé en ce que** la paire médiane (22) de résistances électriques est activée à mi-puissance en même temps que la source supérieure de chaleur (30).

## Patentansprüche

1. Auftau-/Aufwärm-/Kochgerät (1) für Lebensmittel, insbesondere auf Teigbasis wie einer Pizza oder einem Kuchen, das Folgendes umfasst:
- einen Außenrahmen (10), der eine Rückwand (11), eine obere Wand (12), eine untere Wand (13) und zwei Seitenwänden (14) enthält,
- eine Kammer (3), die durch eine Bodenwand (3b), eine Deckenwand (3a), eine untere Wand (3c), zwei Seitenwände (3d) und eine Vordertür (15), die zwischen mindestens einer ersten offenen Position, in der es möglich ist, die Kammer (3) mit Lebensmitteln zu füllen, die aufgetaut/aufgewärmt/gekocht werden sollen, oder die Lebensmittel aus der Kammer (3) zu entnehmen, sobald diese aufgetaut/aufgewärmt/gekocht sind, und einer zweiten geschlossenen Position, in der die Lebensmittel aufgetaut/aufgewärmt/gekocht werden, beweglich ist, definiert ist,
- mindestens eine untere Wärmequelle (20), als Ofenbodenelement bezeichnet, die mit einem einphasigen Strom versorgt wird,
- mindestens eine obere Wärmequelle (30), als Gewölbeelement bezeichnet, das mit einem einphasigen Strom versorgt wird,
**dadurch gekennzeichnet, dass** das Ofenbodenelement (20) Folgendes umfasst:
- mindestens zwei Paare (21, 23) paralleler elektrischer Widerstände (21a, 21b; 23a, 23b), die sich zwischen zwei einander zugewandten Wänden (3d; 3b, 15b) der Kammer (3) erstrecken und in einem zentralen Paar (21) und einem peripheren Paar (23) verteilt sind, und
- ein Mittel (40), das dazu konfiguriert ist, jedes Paar (21, 23) elektrischer Widerstände selektiv und unabhängig voneinander zu steuern.

2. Auftau-/Aufwärm-/Kochgerät (1) nach Anspruch 1, **dadurch gekennzeichnet, dass** das Ofenbodenelement (20) ein drittes mittleres Paar (22) elektrischer Widerstände (22a, 22b) umfasst, wobei jeder Widerstand (22a, 22b) des mittleren Paares (22) zwischen einem zentralen Widerstand (21a, 23a) und einem peripheren Widerstand (21b, 23b) der anderen beiden Paare (21, 23) eingefügt ist.

3. Auftau-/Aufwärm-/Kochgerät (1) nach einem der vorhergehenden Ansprüche, **dadurch gekennzeichnet, dass** die mittleren (22a, 22b) und/oder zentralen (21a, 21b) Widerstände mit reduzierter Leistung, zum Beispiel mit halber Leistung, insbesondere gleichzeitig mit dem Einschalten des gesamten Gewölbeelements (30) betätigt werden können.

4. Auftau-/Aufwärm-/Kochgerät (1) nach einem der vorhergehenden Ansprüche, **dadurch gekennzeichnet, dass** die elektrischen Widerstände des Ofenbodenelements (20) von einer ebenen Platte (50) aus feuerfester Schamotte, die einen Träger für Lebensmittel bildet und die angesammelte Wärme verteilt, überragt werden, wobei die Platte (50) an einer unteren Oberfläche (51) mit einem Temperaturmessfühler (60) versehen ist, der im Wesentlichen in ihrer Mitte angeordnet ist.

5. Auftau-/Aufwärm-/Kochgerät (1) nach Anspruch 4, **dadurch gekennzeichnet, dass** die feuerfeste Trägerplatte (50) direkt auf den elektrischen Widerständen des Ofenbodenelements (20) aufliegt und in der Verlängerung einer inneren Glaswand (15b) der beweglichen Tür (15) in der ersten offenen Position der letzteren angeordnet ist.

6. Auftau-/Aufwärm-/Kochgerät (1) nach einem der vorhergehenden Ansprüche, **dadurch gekennzeichnet, dass** das Gewölbeelement (30) mehrere Glasröhren (31) zur Abgabe von Infrarotstrahlung umfasst.

7. Auftau-/Aufwärm-/Kochgerät (1) nach Anspruch 6, **dadurch gekennzeichnet, dass** die röhrenförmigen Strahler (31) der Infrarotstrahlung alle von einen gemeinsamen herausnehmbaren Auszug (32) getragen werden, der in Gleitschienen (33) verschiebbar ist, die in den Seitenwänden (3d) der Kammer (3) vorgesehen sind, wobei der Auszug (32) durch mechanische Rastnasen und Druckfedern (34) in Position gegen die Deckenwand (3a) der Kammer (3) gehalten wird.

8. Auftau-/Aufwärm-/Kochgerät (1) nach Anspruch 6 oder 7, **dadurch gekennzeichnet, dass** die röhrenförmigen Strahler (31) einen oberen Teil aus Milchglas aufweisen.

9. Auftau-/Aufwärm-/Kochgerät (1) nach einem der vorhergehenden Ansprüche, **dadurch gekennzeichnet, dass** es mindestens eine Leitwand (17; 18) umfasst, die jeweils zwischen den Seitenwänden (3d, 14) der inneren Kammer (3) und dem Außenrahmen (10) und den seitlichen Lüftungsschlitzen (16) vorgesehen ist, um einen Zirkulationsweg für einen aus dem Inneren der Kammer (3) kommenden Heißluftstrom zu bilden, um diesen zur Außenseite des Geräts (1) zu leiten.

10. Verfahren zum Auftauen/Aufwärmen/Kochen von Lebensmitteln, insbesondere auf Teigbasis wie einer Pizza oder einem Kuchen, unter Verwendung eines (1) Geräts nach einem der Ansprüche, **dadurch gekennzeichnet, dass** es darin besteht, jedes Paar (21, 23) elektrischer Widerstände selektiv und unabhängig voneinander zu steuern.

11. Verfahren nach Anspruch 10, **dadurch gekennzeichnet, dass** das Gerät ein drittes mittleres Paar (22) elektrischer Widerstände (22a, 22b) umfasst, wobei jeder Widerstand (22a, 22b) des mittleren Paares (22) zwischen einem zentralen Widerstand (21a, 23a) und einem peripheren Widerstand (21b, 23b) der beiden anderen Paare (21, 23) eingefügt ist, wobei eines der drei Paare (21; 22; 23) der elektrischen Widerstände der unteren Wärmequelle (20) gleichzeitig mit der oberen Wärmequelle (30) mit halber Leistung aktiviert wird.

12. Verfahren nach Anspruch 11, **dadurch gekennzeichnet, dass** das mittlere Paar (22) elektrischer Widerstände gleichzeitig mit der oberen Wärmequelle (30) mit halber Leistung aktiviert wird.

## Claims

1. An apparatus (1) for defrosting/heating/cooking for a foodstuff, in particular dough-based such as a pizza or a tart, comprising:
- an outer frame (10) including a rear wall (11), an upper wall (12), a lower wall (13), two lateral walls (14),
- an enclosure (3) defined by a bottom wall (3b), a top wall (3a), a lower wall (3c), two lateral walls (3d) and a front door (15) movable between at least a first open position in which it is possible to fill the enclosure (3) with a foodstuff to be defrosted/heated/cooked, or to remove the foodstuff from the enclosure (3) once the latter has been defrosted/heated/cooked, and a second closed position in which the foodstuff is defrosted/heated/cooked,
- at least one lower heat source (20), so-called the sole element, powered with a single-phase current,
- at least one upper heat source (30), so-called the vault element, powered with a single-phase current, **characterised in that** the sole member (20) includes:
- at least two pairs (21, 23) of parallel electrical resistors (21a, 21b; 23a, 23b) extending between two walls (3d; 3b, 15b) of the enclosure (3) facing each other, distributed into a central pair (21), and a peripheral pair (23), and
- a means (40) configured to control each pair (21, 23) of electrical resistors selectively and independently of each other.

2. The defrosting/heating/cooking apparatus (1) according to claim 1, **characterised in that** the sole element (20) includes a third middle pair (22) of electrical resistors (22a, 22b), each resistor (22a, 22b) of this middle pair (22) being interposed between a central resistor (21a, 23a) and a peripheral resistor (21b, 23b) of the other two pairs (21, 23).

3. The defrosting/heating/cooking apparatus (1) according to any one of the preceding claims, **characterised in that** the middle (22a, 22b) and/or central (21a, 21b) resistors can be activated at reduced power, for example at mid-power, in particular at the same time as the entire vault element (30) is turned on.

4. The defrosting/heating/cooking apparatus (1) according to any one of the preceding claims, **characterised in that** the electrical resistors of the sole element (20) are topped by a flat plate (50) made of a refractory chamotte forming a support for a foodstuff and diffusing the accumulated heat, said plate (50) being provided, at a lower surface (51), with a temperature probe (60) arranged substantially at its centre.

5. The defrosting/heating/cooking apparatus (1) according to claim 4, **characterised in that** the support refractory plate (50) rests directly on the electrical resistors of the sole element (20) and is arranged in the extension of an inner glazed wall (15b) of the movable door (15), in the first open position of the latter.

6. The defrosting/heating/cooking apparatus (1) according to any one of the preceding claims, **characterised in that** the vault element (30) includes several tubes (31) made of glass for emitting infrared radiations.

7. The defrosting/heating/cooking apparatus (1) according to claim 6, **characterised in that** all of the tubular emitters (31) of infrared radiations are carried by a common removable drawer (32) sliding in slides (33) formed in the lateral walls (3d) of the enclosure (3), said drawer (32) being held in position by mechanical lugs and compression springs (34) bearing against the top wall (3a) of the enclosure (3).

8. The defrosting/heating/cooking apparatus (1) according to claim 6 or 7, **characterised in that** the tubular emitters (31) have an upper portion made of frosted glass.

9. The defrosting/heating/cooking apparatus (1) according to any one of the preceding claims, **characterised in that** it includes at least one baffle (17; 18) formed between the lateral walls (3d, 14) respectively of the inner enclosure (3) and of the outer frame (10) and of the lateral vents (16) so as to form a pathway for the circulation of a hot air blade coming from the inside of the enclosure (3) to direct it towards the outside of the apparatus (1).

10. A method for defrosting/heating/cooking for a foodstuff, in particular dough-based such as a pizza or a tart using an apparatus (1) according to any one of the claims, **characterised in that** it consists in controlling each pair (21, 23) of electrical resistors selectively and independently of each other.

11. The method according to claim 10, **characterised in that**, the apparatus including a third middle pair (22) of electrical resistors (22a, 22b), each resistor (22a, 22b) of this middle pair (22) being interposed between a central resistor (21a, 23a) and a peripheral resistor (21b, 23b) of the other two pairs (21, 23), one of the three pairs (21; 22; 23) of electrical resistors of the lower heat source (20) is activated at mid-power at the same time as the upper heat source (30).

12. The method according to claim 11, **characterised in that** the middle pair (22) of electrical resistors is activated at mid-power at the same time as the upper heat source (30).
